(19) 

Europäisches Patentamt
European Patent Office
Office européen des brevets

(11) **EP 2 199 116 B1**

(12) **EUROPEAN PATENT SPECIFICATION**

(45) Date of publication and mention of the grant of the patent:
**28.03.2012 Bulletin 2012/13**

(51) Int Cl.:
***B60C 23/04*** *(2006.01)*

(21) Application number: **09179264.8**

(22) Date of filing: **15.12.2009**

(54) **Tire pressure warning system and method of controlling the same**

Reifendruckwarnsystem und Verfahren zu dessen Steuerung

Système d'alerte de pression des pneus et son procédé de commande

(84) Designated Contracting States:
**DE FR**

(30) Priority: **18.12.2008 JP 2008322853**

(43) Date of publication of application:
**23.06.2010 Bulletin 2010/25**

(73) Proprietor: **Toyota Jidosha Kabushiki Kaisha
Toyota-shi, Aichi-ken, 471-8571 (JP)**

(72) Inventor: **KUSUNOKI Hideki c/oToyota Jidosha
Kabushiki Kaisha
Toyota-shi, Aichi-ken, 471-8571 (JP)**

(74) Representative: **Winter, Konrad Theodor
Winter, Brandl, Fürniss, Hübner,
Röss, Kaiser, Polte - Partnerschaft
Patent- und Rechtsanwaltskanzlei
Bavariaring 10
80336 München (DE)**

(56) References cited:
**WO-A1-2008/119524      DE-A1- 3 539 489
JP-A- 2004 291 797**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

BACKGROUND OF THE INVENTION

1. Field of the Invention

The present invention relates to a tire pressure warning system and method of controlling the tire pressure warning system.

2. Description of the Related Art

A conventional system that detects the inner air pressure of automobile tires, there has been known in the related art. It includes: a tire pressure sensor tire for; a radio transmitter that transmits a detected pressure signal of the tire pressure sensor; and a receiver that receives the detected pressure signal. A similar tire air detection device for issuing an alarm in response to a former determination history is disclosed in Japanese Patent Application Publication No. 2004-291797.

The tire pressure sensor and the radio transmitter are provided in a wheel. Detected pressure information on the tire pressure is transmitted, as necessary, to the receiver by the radio transmitter. The receiver is provided on the vehicle body. The receiver receives the detected pressure information that is transmitted by the radio transmitter, and monitors the tire pressure.

The tire pressure sensor and the radio transmitter that is provided in the wheel operate at regular intervals. For example, the tire pressure sensor detects the air pressure of the tire every hour while the vehicle is not moving, and every minute while the vehicle is moving. Then, the transmitter transmits the detected tire pressure signal.

In the tire pressure detection device described above, a threshold for warning determination as to whether or not the warning is performed is provided with hysteresis, and the tire pressure threshold for issue of warning and the tire pressure threshold for termination of warning are set differently. That is, the warning is issued when the tire pressure becomes lower than a warning issue threshold value, and then the warning is canceled when the tire pressure becomes higher than a warning termination threshold value that is larger than the warning issue threshold value.

The hysteresis helps to remove the lack of definiteness of determination around the threshold, which is expected when the determination is made by a single warning determination threshold value. Accordingly, the tire pressure detection device can stably make warning determination. The tire pressure detection device of this type is disclosed, for example, in the Japanese Patent Application Publication No. 2005-88613 (JP-A-2005-88613).

In the tire pressure detection device of the related art, the air pressure threshold at which terminates the warning increases, along with the increase of tire temperature, so as to become higher than a suggested pressure value which the user adjusts as reference tire pressure. A similar system is known from WO 2008/119524 Al wherein the reference temperature is adjusted in response to the ambient temperature.

SUMMARY OF THE INVENTION

The present invention provides a tire pressure warning system that has further safety.

A first aspect of the present invention relates to a tire pressure warning system that issues, based on a relationship between tire temperature and reference tire pressure, a tire pressure decrease warning when the tire pressure is lower than a first tire pressure warning threshold related to the reference tire pressure, wherein the tire pressure warning system, after issuing the tire pressure decrease warning, terminates the tire pressure decrease warning when the tire pressure is higher than a second tire pressure warning threshold related to the reference tire pressure. The first tire pressure warning threshold is lower than the second tire pressure warning threshold, and a difference between the first tire pressure warning threshold and the second tire pressure warning threshold in case that the tire temperature is higher than a designated temperature threshold is smaller than a difference between the first tire pressure warning threshold and the second tire pressure warning threshold in case that the tire temperature is lower than the designated temperature threshold.

When the tire temperature is higher than the designated temperature threshold, the difference between the first tire pressure warning threshold and the second tire pressure warning threshold may be reduced in correspondance with the increase of the tire temperature.

A second aspect of the present invention relates to a method of controlling a tire pressure warning system that issues, based on a relationship between tire temperature and reference tire pressure, a tire pressure decrease warning when the tire pressure is lower than a first tire pressure warning threshold related to the reference tire pressure, and the tire pressure warning system that, after issuing the tire pressure decrease warning, terminates the tire pressure decrease warning when the tire pressure is higher than a second tire pressure warning threshold related to the reference tire pressure. The first tire pressure warning threshold is smaller than the second tire pressure warning threshold. The method of controlling a tire pressure warning system has a step of changing hysteresis that changes a difference between the first tire pressure warning threshold and the second tire pressure warning threshold when the tire temperature is higher than a designated temperature threshold.

The step of changing hysteresis may be a step that reduces, in correspondance with the increase of the tire temperature, the difference between the first tire pressure warning threshold and the second tire pressure warning threshold when the tire temperature is higher than the designated temperature threshold.

According to this invention, a tire pressure warning system can be provided that has an improved safety can be provided.

BRIEF DESCRIPTION OF THE DRAWINGS

The foregoing and further features and advantages of the invention will become apparent from the following description of example embodiments with reference to the accompanying drawings, wherein like numerals are used to represent like elements, and wherein:

FIG. 1 is a schematic view that illustrates the relationship between the tire temperature (T) and the tire pressure (P) according to the embodiment of the present invention;
FIG. 2 is a schematic view that illustrates the relationship between the tire temperature (T) and the tire pressure (P) according to the related art; and
FIG. 3 is a schematic view that illustrates an example of a detection system that detects the tire pressure and the tire temperature.

DETAILED DESCRIPTION OF THE EMBODIMENTS

The tire pressure warning system exemplified in the embodiment is provided with a correct function, and the tire pressure difference between the warning issue threshold and the warning termination threshold is set smaller. Accordingly, the tire pressure warning system prevents the warning termination threshold from increasing higher than the suggested tire pressure along with the increase of the tire temperature.

The tire pressure warning system that is exemplified in the embodiment is provided with the reference tire pressure that considers the increase of tire temperature during the travel. The tire pressure warning system issues the warning upon detecting the decrease of tire pressure from the reference tire pressure. The reference tire pressure is determined in advance based on a predetermined relationship with the tire temperature. In other words, the reference tire pressure is the reference pressure that is corrected by tire temperature.

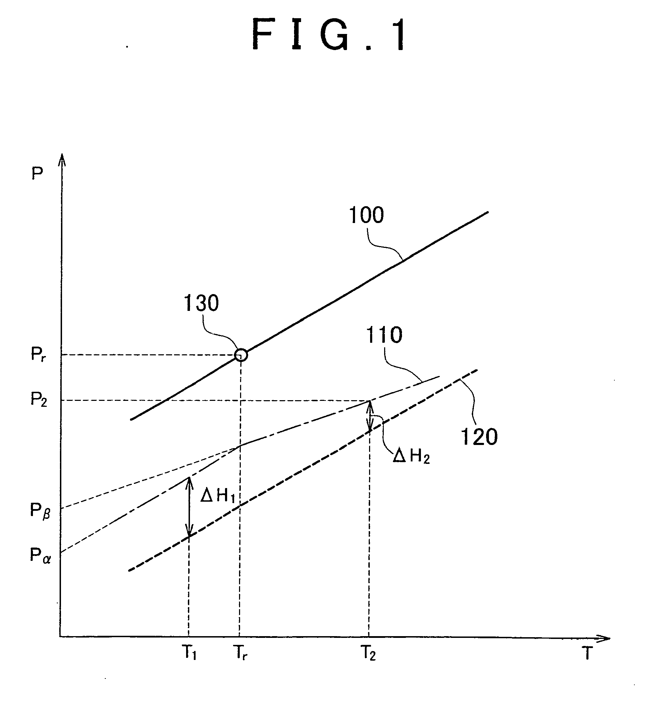

Hereinafter, description is made with reference to the drawings. FIG. 1 is a schematic view that illustrates the relationship between the tire temperature (T) and the tire pressure (P) according to the embodiment of the present invention. As shown in FIG. 1, the tire pressure warning system has a predetermined reference tire pressure 100 in relationship with the temperature. The reference tire pressure 100 is typically a suggested tire pressure that is determined by the relationship between the vehicle and the tire.

For example, it is assumed that while the tire temperature is Tr, a user adjusts the tire pressure to Pr, which is a suggested value as a reference tire pressure 100. However, the tire temperature is not necessarily at Tr all the time. The tire temperature varies depending on the heat generation during the travel or the vehicle's environmental temperature. In accordance with the change of tire temperature, even without filling or deflating of the tire, the tire pressure varies as indicated by the reference tire pressure 100 in FIG. 1.

Reference numeral 120 in FIG. 1 indicates a tire pressure warning issue threshold line. The warning issue threshold is determined in a relationship with the tire temperature (T). In the example of FIG. 1, the tire pressure warning issue threshold line 120 is at 75% of the reference tire pressure 100 at any temperature.

Reference numeral 110 in FIG. 1 indicates a tire pressure warning termination threshold line. The warning termination threshold is determined in a relationship with the tire temperature (T). In the example shown in FIG. 1, the tire pressure warning termination threshold line 110 is plotted as 90% of the reference tire pressure 100 below a predetermined temperature Tr (typically a reference temperature of 25°C).

As described above, when the temperature is at a predetermined value or lower, the warning issue threshold and the warning termination threshold are set at a predetermined proportion relative to the reference tire pressure 100.

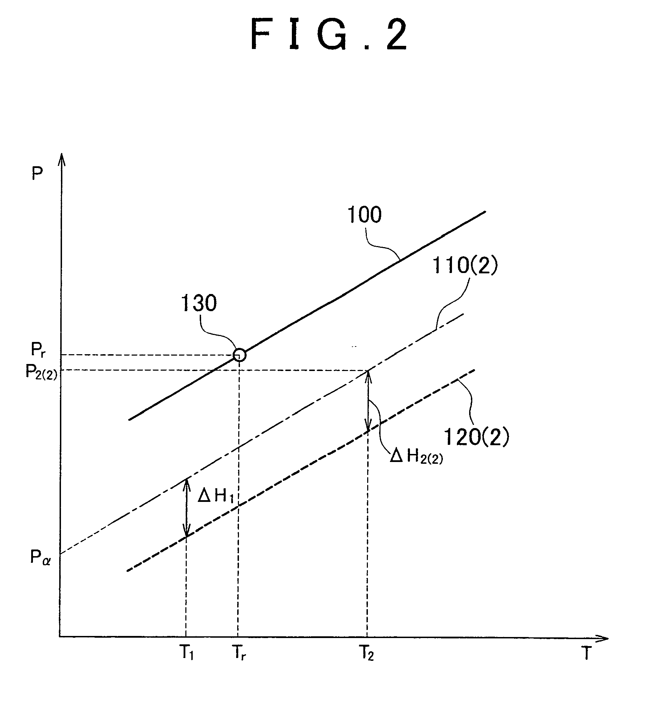

Next, description is made of a relationship between the tire temperature (T) and the tire pressure (P) of the related art shown in FIG. 2. FIG. 2 is a schematic view that illustrates the relationship between the tire temperature (T) and the tire pressure (P) according to the related art.

As indicated by a tire pressure threshold for warning issue line 120 in FIG. 2, the warning issue threshold is determined by the relationship with the tire temperature (T). In the example of FIG. 2, the tire pressure threshold for warning issue line 120 (2) is plotted as 75% of the reference tire pressure 100 at any temperature.

As indicated by a tire pressure warning termination threshold for line 110 (2) in FIG. 2, the warning termination threshold is determined in a relationship with the tire temperature (T). In the example of FIG. 2, the tire pressure warning termination threshold line 110 (2) is plotted as 90% of the reference tire pressure 100 at any temperature.

In FIG. 2, when the tire temperature (T) is $T_1$, which is lower than the predetermined temperature $T_r$, the difference between the warning issue threshold and the warning termination threshold is $\Delta H_1$. In FIG. 2, when the tire temperature (T) is $T_2$, which is higher than the predetermined temperature $T_r$, the difference between the warning issue threshold and the warning termination threshold is $\Delta H_2$ (2).

Here, in the related art, regardless of whether the tire temperature (T) is higher or lower than the predetermined temperature $T_r$, the warning issue threshold is always set as 75% of the reference tire pressure 100. Additionally, regardless of whether the tire temperature (T) is higher or lower than the predetermined temperature $T_r$, the warning termination threshold is always set as 90% of the reference tire pressure 100.

The differences, $\Delta H_1$ and $\Delta H_2(_2)$, between the warning issue threshold and the warning termination threshold are the same regardless of the tire temperature (T). Therefore, when the tire temperature (T) is $T_2$, which is higher than the predetermined temperature $T_r$, the tire pressure (P) becomes $P_2(_2)$. Consequently the value of $P_2(_2)$ may come fairly close to the reference pressure Pr at predetermined temperature Tr. Additionally, when the tire temperature (T) rises further, the tire pressure (P) of the tire pressure warning termination threshold line 110 (2) also rises, and may exceed the reference pressure $P_r$ at the predetermined temperature $T_r$.

That is, in the above case, even if the tire pressure (P) becomes higher than the reference pressure $P_r$ at the predetermined temperature $T_r$, the warning that warns the tire pressure decrease is kept on. This situation is not preferable when a driver wants to know an accurate tire condition.

For this reason, the tire pressure warning system according to the present invention is arranged that when the tire temperature (T) is higher than the predetermined temperature $T_r$, the inclination of the tire pressure warning termination threshold line 110 is eased so as no to exceed the reference pressure $P_r$ at the predetermined temperature $T_r$. The predetermined temperature Tr may be a reference temperature of 25°C, or may be a temperature of a reset point 130. The reset point 130 is the tire temperature (T) where the tire pressure (P) setting is adjusted or reset by the driver.

As shown in FIG. 1, the tire pressure warning termination threshold line 110 typically has the relationship expressed by the following equations (1) and (2). In the case of $T < T_r$:

$$P = a \cdot T + P_a \ \dots \ \text{Equation (1)}$$

In the case of $T = T_r$:

$$P = \beta \cdot T + P_\beta \ \dots \ \text{Equation (2)}$$

In the relationship between the equation (1) and the equation (2), it is assumed that $P_a < P_B$. However, the tire pressure warning termination threshold line 110 is not limited to the relationship of the equation (1) and equation (2), but any relationship can be selected within the scope of the above technical thoughts.

The tire pressure warning system has hysteresis $\Delta H_1$ and $\Delta H_2$, so that the cyclic repetition of the on-off operation of a warning lamp in a short time period can be prevented even when the tire temperature (T) changes according to a change of the environmental temperature.

Supposedly, when the rise of the tire temperature (T) is due to traveling of the vehicle and the like, the tire is not easily affected by the vehicle's environmental changes such as the fluctuation of ambient temperature. Accordingly, if the tire temperature (T) rises due to traveling of the vehicle and the like, reducing the hysteresis from $\Delta H_1$ to $\Delta H_2$ does not easily create the situation in which the on-off of the warning lamp due to temperature fluctuation is repeated in a short time period. As shown in FIG. 1, the hysteresis $\Delta H_2$ may be set so as to gradually decrease in accordance with the rise of the tire temperature (T).

When the vehicle starts traveling from a stopped state, the temperature in the tire rises. In correspondence with the temperature rise in the tire, the tire pressure rises. The transmitter that is mounted in the tire has a function to transmit the detection values of the tire pressure sensor and the tire temperature sensor.

Here, the tire pressure sensor is considered to detect the tire pressure in real-time. On the other hand, since the transmission of the tire temperature to the tire temperature sensor consumes time, there can be a difference, in a transient state, between the tire pressure that is estimated from the detection value of the tire temperature sensor and the real tire pressure.

As a remedy, an ascending curve of the tire temperature is experimentally simulated, a temperature ascending curve of the temperature sensor is measured, and a map of the temperature ascending curve is prepared with respect to the vehicle speed and environmental temperature. A transient temperature ascending curve of the tire is determined generally based on the vehicle speed and environmental temperature.

Accordingly, in the actual traveling, the above simulation is reproduced. If there is a difference between the actual tire pressure and the tire pressure that is estimated by the temperature that is obtained from the detection value of the temperature sensor, the difference can be determined whether to be the same as the one on the aforementioned map based on the vehicle speed and the environmental temperature (outside temperature). If the difference is the same as the one on the map, the difference may be corrected. Accordingly, a tire state can be recognized more correctly.

Although a detection system that detects the tire pressure and tire temperature may be a conventionally known technique, an exemplary embodiment thereby will be described below. The detection system corresponds to the tire pressure warning system described above.

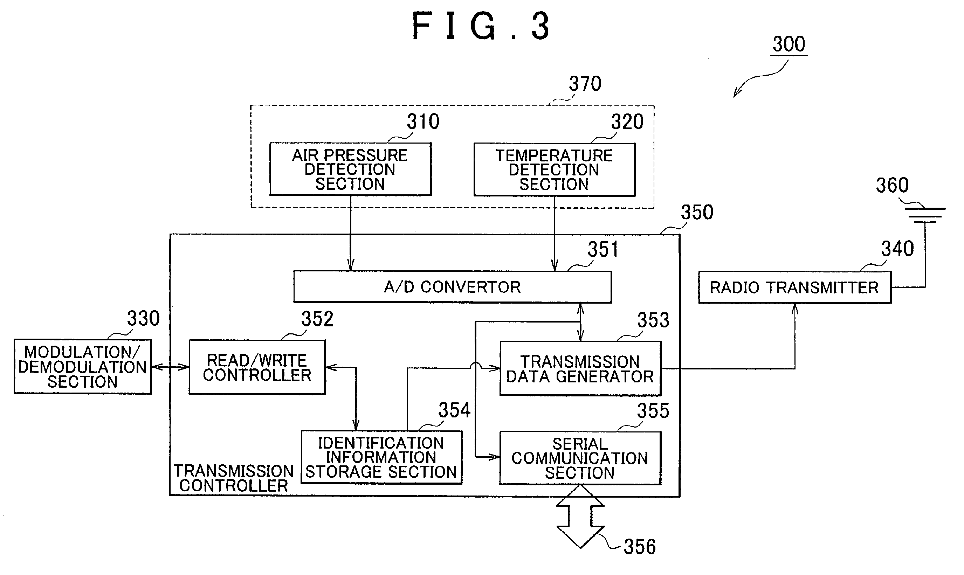

FIG. 3 is a schematic view that illustrates an example of a detection system 300 that detects the tire pressure and the tire temperature. In FIG. 3, a transmission controller 350 includes: an A/D converter 351; a transmission data generator 353; an identification information storage section 354; a read-write controller 352; a serial communication section 355; and serial data input/output (I/O) means 356.

The I/O means 356 is arranged on the housing of the transmission controller 350, and configured to allow the access from the outside to the transmission controller 350. The I/O means 356 is, for example, used before the transmission controller 350 is installed into an air pressure detection system (not shown), and used when a tire ID is written into the identification information storage section 354 upon the tire replacement.

By the A/D converter 351, an analog air pressure data signal and an analog temperature data signal of the tire pressure and tire temperature that are detected by an air pressure detection part 310 and a temperature detection part 320 are converted into a digital signal.

The transmission data generator 353 operates the A/D converter 351 at predetermined time intervals, and temporarily stores the air pressure data and the temperature data that are output by the A/D converter 351. The transmission data generator 353 may generate the transmission data when the comparatively computed difference between the firstly obtained air pressure data and temperature data and the secondly obtained air pressure data and temperature data exceeds a predetermined allowance.

The transmission data may include: the lower one of the air pressure data and higher one of the temperature data that are comparatively computed in the above; a tire ID (also referred to as tire identification information) that specifies the tire that produced the difference; and vehicle ID.

The transmission data generator 353 refers to the identification information storage section 354 and obtains tire ID, and then generates the transmission data. The transmission data generator 353 outputs the generated transmission data to the radio transmitter 340.

The identification information storage section 354 may be configured with a storage medium such as a nonvolatile memory, and may store tire ID that are used to identify the target tire position and vehicle ID. The read-write controller 352 writes the vehicle ID and tire ID to the identification information storage section 354 when receiving a writing request signal that includes a vehicle ID data signal and a tire ID data signal from the I/O means 356.

When the read-write controller 352 receives a writing request signal that includes the vehicle ID data signal and the tire ID data signal that are output by a modulation/demodulation section 330, the read-write controller 352 writes the vehicle ID and tire ID to the identification information storage section 354.

When receiving a readout request signal from the I/O means 356, the read-write controller 352 may control to output the air pressure data signal and temperature data signal that are output by the A/D converter 351 through the serial communication section 355 to the I/O means 356.

When receiving the readout request signal from the modulation/demodulation section 330, the read-write controller 352 may control to output the air pressure data signal and temperature data signal that are output by the A/D converter 351 to the modulation/demodulation section 330.

The radio transmitter 340 generates a data signal from the transmission data that is supplied by the transmission data generator 353, by demodulating a predetermined carrier wave with a predetermined demodulation scheme. A generated data signal is transmitted by radio from a transmitting antenna 360.

A non-contact power receiving unit (not shown) supplies electric power to a tire state detection unit 370. The non-contact power receiving unit may include a receiving coil, a rectifier, a voltage stabilizer, and the modulation/demodulation section 330.

When the vehicle ID and tire ID are written onto the identification information storage section 354, or when it is checked whether the air pressure detection section 310, the temperature detection section 320, and the A/D converter 351 function normally or not, the modulation/demodulation section 330 may demodulate the writing request signal or the readout request signal that is transmitted by a transmitting coil of the non-contact power supply unit (not shown).

The modulation/demodulation section 330 transmits the readout request signal to the read-write controller 352. The modulation/demodulation section 330 may modulate the obtained air pressure data signal and temperature data signal, and transmit the modulated air pressure data signal and temperature data signal to the transmitting coil of non-contact power supply unit through a receiving coil (not shown).

In the detection system 300, the transmission data generator 353 actuates the A/D converter 351 every predetermined period. Accordingly, the air pressure data signal and the temperature data signal that are detected by the air pressure detection section 310 and the temperature detection section 320 are digitized by the A/D converter 351.

The detection system 300 temporarily stores the digitized air pressure data and the temperature data. The transmission data generator 353 computes the difference between the first air pressure data and the first temperature data that are obtained before and the second air pressure data and the second temperature data that are obtained later by comparing them respectively, based on the air pressure data and the temperature data that are obtained every predetermined period by the A/D converter 351.

Furthermore, when the difference, as a result of the comparison computation, is more than a predetermined allowance, the transmission data generator 353 generates the transmission data by referring the vehicle ID and the tire ID that are stored in the identification information storage section 354, and outputs the transmission data signal to the radio transmitter 340.

The tire pressure warning system and the method of controlling the tire pressure warning system that are described in the embodiment are not limited to the above description in any way. For example, in the embodiment described above, the tire pressure warning issue threshold line 120 is at 75% of the reference tire pressure 100, the tire pressure warning termination threshold line 110 is plotted as 90% of the reference tire pressure 100 below the predetermined temperature and the reference temperature is set at 25°C; however, the aspect of the invention is not limited to this configuration. The values for setting the threshold lines and reference temperature can be adjusted within the range around the values described above. The structure, operation, and the process of the present invention may be modified within the scope of obviousness. In the above embodiment, the gas that fills the tire is described as air. However, the present invention is not limited to this, but various modifications are possible within the scope of obviousness.

**Claims**

1. A tire pressure warning system (300) for issuing a tire pressure decrease warning based on a relationship between a tire temperature and a reference tire pressure comprising:

   a tire state detection unit (370) for detecting a tire pressure and a tire temperature including an air pressure detection section (310) and a temperature detection section (320),
   a transmission controller (350) for issuing the tire pressure decrease warning when it is determined, that the tire pressure is lower than a first tire pressure warning threshold (120) related to the reference tire pressure, and for terminating the tire pressure decrease warning when it has been determined that the tire pressure is higher than a second tire pressure warning threshold (110) related to the reference tire pressure,
   the first tire pressure warning threshold (120) is set to be lower than the second tire pressure warning threshold (110), **characterized in that** a difference ($\Delta H_2$) between the first tire pressure warning threshold and the second tire pressure warning threshold in case that the tire temperature is higher than a predetermined temperature threshold (Tr) is set to be smaller than a difference ($\Delta H_1$) between the first tire pressure warning threshold and the second tire pressure warning threshold in case that the tire temperature is lower than the predetermined temperature threshold (Tr).

2. The tire pressure warning system according to claim 1 wherein, when the tire temperature is higher than the predetermined temperature threshold (Tr), the difference ($\Delta H_2$) between the first tire pressure warning threshold (120) and the second tire pressure warning threshold (110) is reduced corresponding with the increase of the tire temperature (T).

3. The tire pressure warning system according to claim 1 or 2, wherein the reference tire pressure is set based on the tire temperature (T).

4. The tire pressure warning system according to any one of claims 1 to 3,
   wherein the reference tire pressure (Pr) at the temperature threshold (Tr) is a suggested tire pressure of the tire.

5. The tire pressure warning system according to any one of claims 1 to 4, further comprising:

   a tire pressure detection part (310) and
   a tire temperature detection part (320), wherein in the case the tire pressure, which is estimated based on the relationship between the tire temperature obtained from the detection value of the tire temperature detection part (320) and the reference tire pressure, is different from the actual tire pressure detected by the tire pressure detection part (310), the estimated tire pressure is corrected by a tire temperature ascending curve determined based on a vehicle speed and environmental temperature.

6. A method of controlling a tire pressure warning system that issues, based on a relationship between tire temperature and reference tire pressure, a tire pressure decrease warning when the tire pressure is lower than a first tire pressure warning threshold (120) related to the reference tire pressure (100), wherein the tire pressure warning system , after issuing the tire pressure decrease warning, terminates the tire pressure decrease warning when the tire pressure is higher than a second tire pressure warning threshold (120) related to the reference tire pressure,
   the first tire pressure warning threshold (120) is lower than the second tire pressure warning threshold (110), and **characterized by** comprising a step of changing hysteresis that changes a difference ($\Delta H_2$) between the first tire pressure warning threshold (120) and the second tire pressure warning threshold (110) in case that the tire temperature (T) is higher than the predetermined temperature threshold (Tr).

7. The method of controlling the tire pressure warning system according to claim 6, wherein the step of changing hysteresis is the step of reducing the difference, corresponding with the increase of the tire temperature, between the first tire pressure warning threshold and the second tire pressure warning threshold when the tire temperature is higher than the predetermined temperature threshold.

**Patentansprüche**

1. Reifendruckwarnsystem (300) zum Ausgeben einer Reifendruckabfallwarnung basierend auf einer Beziehung zwischen einer Reifentemperatur und einem Referenzreifendruck, mit:

   einer Reifenzustand-Erfassungseinheit (370) zum Erfassen eines Reifendrucks und einer Reifentemperatur mit einem Luftdruck-Erfassungsabschnitt (310) und einem Temperatur-Erfassungsabschnitt (320); und
   einer Übertragungssteuerungseinrichtung (350) zum Ausgeben der Reifendruckabfallwarnung, wenn bestimmt wird, dass der Reifendruck geringer als ein erster Reifendruck-Warnungsschwellwert (120) in Bezug auf den Referenzreifendruck ist, und zum Beenden der Reifendruckabfallwarnung, wenn bestimmt wurde, dass der Reifendruck höher als ein zweiter Reifendruck-Warnungsschwellwert (110) in Bezug auf den Referenzreifendruck ist; wobei
   der erste Reifendruck-Warnungsschwellwert (120) eingestellt ist, um geringer als der zweite Reifendruck-Warnungsschwellwert (110); **dadurch gekennzeichnet, dass**
   wenn die Reifentemperatur höher als ein vorbestimmter Temperaturschwellwert _ (Tr) ist, eine Differenz ($\Delta H_2$) zwischen dem ersten Reifendruck-Warnungsschwellwert und dem zweiten Reifendruck-Warnungsschwellwert eingestellt ist, um kleiner als eine Differenz ($\Delta H_1$) zwischen dem ersten Reifendruck-Warnungsschwellwert und dem zweiten Reifendruck-Warnungsschwellwert zu sein, wenn die Reifentemperatur geringer als der vorbestimmte Temperaturschwellwert (Tr) ist.

2. Reifendruckwarnsystem nach Anspruch 1, wobei die Differenz ($\Delta H_2$) zwischen dem ersten Reifendruck-Warnungsschwellwert (120) und dem zweiten Reifendruck-Warnungsschwellwert (110) entsprechend der Erhöhung der Reifentemperatur (T) reduziert wird, wenn die Reifentemperatur höher als der vorbestimmte Temperaturschwellwert (Tr) ist.

3. Reifendruckwarnsystem nach Anspruch 1 oder 2, wobei der Referenzreifendruck basierend auf der Reifentemperatur (T) eingestellt wird.

4. Reifendruckwarnsystem nach einem der Ansprüche 1 bis 3, wobei der Referenzreifendruck (Pr) bei dem Temperaturschwellwert (Tr) ein vorgeschlagener Reifendruck des Reifens ist.

5. Reifendruckwarnsystem nach einem der Ansprüche 1 bis 4, ferner mit:

   einem Reifendruck-Erfassungsteil (310); und
   einem Reifentemperatur-Erfassungsteil (320); wobei
   der geschätzte Reifendruck durch einen basierend auf einer Fahrzeuggeschwindigkeit und einer Umgebungstemperatur bestimmten steigenden Reifentemperaturverlauf korrigiert wird, wenn der Reifendruck, welcher basierend auf der Beziehung zwischen der von dem Erfassungswert des Reifentemperatur-Erfassungsteils (320) erhaltenen Reifentemperatur und dem Referenzreifendruck geschätzt wird, von dem durch das Reifendruck-Erfassungsteil (310) erfassten Ist-Reifendruck verschieden ist.

6. Verfahren zum Steuern eines Reifendruckwarnsystems, das basierend auf einer Beziehung zwischen einer Reifentemperatur und einem Referenzreifendruck eine Reifendruckabfallwarnung ausgibt, wenn der Reifendruck geringer als ein erster Reifendruck-Warnungsschwellwert (120) in Bezug auf den Referenzreifendruck (100) ist; wobei
   das Reifendruckwarnsystem nach Ausgeben der Reifendruckabfallwarnung die Reifendruckabfallwarnung beendet, wenn der Reifendruck höher als ein zweiter Reifendruck-Warnungsschwellwert (110) in Bezug auf den Referenzreifendruck ist; und
   der erste Reifendruck-Warnungsschwellwert (120) niedriger als der zweite Reifendruck-Warnungsschwellwert (110); **gekennzeichnet durch**
   einen Hysterese-Änderungsschritt, der eine Differenz ($\Delta H_2$) zwischen dem ersten Reifendruck-Warnungsschwellwert (120) und dem zweiten Reifendruck-Warnungsschwellwert (110) ändert, wenn die Reifentemperatur (T) höher als der vorbestimmte Temperaturschwellwert (Tr) ist.

7. Verfahren zum Steuern des Reifendruckwarnsystems nach Anspruch 6, wobei der Hysterese-Änderungsschritt der Schritt der der Zunahme der Reifentemperatur entsprechenden Reduzierung der Differenz zwischen dem ersten Reifendruck-Warnungsschwellwert (110) und dem zweiten Reifendruck-Warnungsschwellwert (110) ist, wenn die Reifentemperatur höher als der vorbestimmte Temperaturschwellwert ist.

**Revendications**

1. Système d'alarme de pression de pneu (300) pour sortir une alarme de diminution de pression de pneu en fonction d'une relation entre une température de pneu et une pression de pneu de référence comprenant :

   une unité de détection d'état de pneu (370) pour détecter une pression de pneu et une température de pneu incluant une section de détection de pression d'air (310) et une section de détection de température (320),

une commande de transmission (350) pour sortir l'alarme de diminution de pression de pneu quand il est déterminé, que la pression de pneu est inférieure à un premier seuil d'alarme de pression de pneu (120) lié à la pression de pneu de référence, et pour terminer l'alarme de diminution de pression de pneu quand il a été déterminé que la pression de pneu est supérieure à un second seuil d'alarme de pression de pneu (110) lié à la pression de pneu de référence, dans lequel

le premier seuil d'alarme de pression de pneu (120) est réglé pour être inférieur au second seuil d'alarme de pression de pneu (110), **caractérisé en ce qu'**une différence ($\Delta H_2$) entre le premier seuil d'alarme de pression de pneu et le second seuil d'alarme de pression de pneu dans un cas où la température de pneu est supérieure à un seuil de température prédéterminé (Tr) est réglée pour être plus petite qu'une différence ($\Delta H_1$) entre le premier seuil d'alarme de pression de pneu et le second seuil d'alarme de pression de pneu dans un cas où la température de pneu est inférieure au seuil de température prédéterminé (Tr).

2. Système d'alarme de pression de pneu selon la revendication 1 dans lequel, quand la température de pneu est supérieure au seuil de température prédéterminé (Tr), la différence ($\Delta H_2$) entre le premier seuil d'alarme de pression de pneu (120) et le second seuil d'alarme de pression de pneu (110) est réduite en fonction de l'augmentation de la température de pneu (T).

3. Système d'alarme de pression de pneu selon la revendication 1 ou 2, dans lequel la pression de pneu de référence est réglée en fonction de la température de pneu (T).

4. Système d'alarme de pression de pneu selon l'une quelconque des revendications 1 à 3, dans lequel la pression de pneu de référence (Pr) au seuil de température (Tr) est une pression de pneu conseillée du pneu.

5. Système d'alarme de pression de pneu selon l'une quelconque des revendications 1 à 4, comprenant en outre :

une partie de détection de pression de pneu (310) et
une partie de détection de température de pneu (320), dans lequel
dans le cas où la pression de pneu, qui est estimée d'après la relation entre la température de pneu obtenue de la valeur de détection de la partie de détection de température de pneu (320) et la pression de pneu de référence, est différente de la pression de pneu réelle détectée par la partie de détection de pression de pneu (310), la pression de pneu estimée est corrigée par une courbe ascendante de température de pneu déterminée en fonction d'une vitesse de véhicule et d'une température de l'environnement.

6. Procédé de commande d'un système d'alarme de pression de pneu qui sort, en fonction d'une relation entre la température de pneu et la pression de pneu de référence, une alarme de diminution de pression de pneu quand la pression de pneu est inférieure à un premier seuil d'alarme de pression de pneu (120) lié à la pression de pneu de référence (100), dans lequel le système d'alarme de pression de pneu, après avoir sorti l'alarme de diminution de pression de pneu, termine l'alarme de diminution de pression de pneu quand la pression de pneu est supérieure à un second seuil d'alarme de pression de pneu (120) lié à la pression de pneu de référence, le premier seuil d'alarme de pression de pneu (120) est inférieur au second seuil d'alarme de pression de pneu (110), et **caractérisé en ce qu'**il comprend une étape d'hystérésis de changement qui change une différence ($\Delta H_2$) entre le premier seuil d'alarme de pression de pneu (120) et le second seuil d'alarme de pression de pneu (110) dans le cas où la température de pneu (T) est supérieure au seuil de température (Tr) prédéterminé.

7. Procédé de commande du système d'alarme de pression de pneu selon la revendication 6, dans lequel l'étape d'hystérésis de changement est l'étape de réduction de la différence, correspondant à l'augmentation de la température de pneu, entre le premier seuil d'alarme de pression de pneu et le second seuil d'alarme de pression de pneu quand la température de pneu est supérieure au seuil de température prédéterminé.

# FIG.1

# F I G . 2

# FIG.3

EP 2 199 116 B1

**EP 2 199 116 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004291797 A
- JP 2005088613 A
- WO 2008119524 A1